# EUROPEAN PATENT APPLICATION

(11) **EP 2 942 490 A1**
(43) Date of publication of application: **11.11.2015**
(21) Application number: 15158242.6
(22) Date of filing: 09.03.2015
(51) Int. Cl.: F01D 11/24, F01D 5/08, F02C 6/08, F02K 3/02

(54) **TURBINE CLEARANCE CONTROL SYSTEM AND METHOD FOR IMPROVED VARIABLE CYCLE GAS TURBINE ENGINE FUEL BURN**

(30) Priority: 09.05.2014 US 201461990863 P
(71) Applicant: UNITED TECHNOLOGIES CORPORATION, Hartford, CT 06101 (US)
(72) Inventor: Ledwith, Walter A. Jr., Marlborough, Connecticut 06447 (US); Carr, Scott A., Manchester, Connecticut 06040 (US); Hanlon, Christopher J., Sturbridge, Massachusetts 01566 (US); White, Peter A., West Hartford, Connecticut 06107 (US); Hall, Theodore W., Berlin, Connecticut 06037 (US); Farris, John R., Bolton, Connecticut 06043 (US); Miller, Andrew S., Marlborough, Connecticut 06447 (US); Robak, Christopher W., Manchester, Connecticut 06042 (US); Pimenta, David C., Rocky Hill, Connecticut 06067 (US); Griffin, David Richard, Tolland, Connecticut 06084 (US)
(74) Representative: Hull, James Edward

(57) **Abstract**

A method of assembling a gas turbine engine (20) includes setting a build clearance at assembly in response to a running tip clearance (108) defined with a cooled cooling air. Another method of operating a gas turbine engine (20) includes supplying a cooled cooling air to a high pressure turbine (32) in response to an engine rotor speed. A corresponding gas turbine engine (20) comprising a turbine clearance control, wherein a part of the core flow (60) is bled to be cooled in a heat exchanger (70) and then directed to the high pressure turbine section (32), wherein the heat exchanger cooling flow is a first by pass flow (58) coming from a second fan stage section and then directed to a second by pass flow (56) coming from a first stage fan section.

## Description

### BACKGROUND

The present disclosure relates to gas turbine engines, and more particularly to a method of assembling a gas turbine engine therefor.

Gas turbine engines, such as those that power modern commercial and military aircraft, generally include a compressor section to pressurize an airflow, a combustor section to burn a hydrocarbon fuel in the presence of the pressurized air, and a turbine section to extract energy from the resultant combustion gases. The compressor and turbine sections include rotatable blade and stationary vane arrays. Within an engine case structure, the radial outermost tips of each blade array are positioned in close proximity to a shroud assembly. In the turbine, Blade Outer Air Seals (BOAS) of the shroud assembly are located adjacent to the blade tips such that a radial tip clearance is defined there between. Similar components are employed in the compressor.

When in operation, the engine thermal environment varies such that the radial tip clearance varies. The radial tip clearance is typically designed so that the blade tips do not rub against the BOAS under high power operations when the blade disk and blades expand as a result of thermal expansion and centrifugal loads. When engine power is reduced, the radial tip clearance increases. To facilitate engine performance, it is operationally advantageous to maintain a close radial tip clearance through the various engine operational conditions.

For commercial engines, active clearance control maintains tight clearances, but may be incompatible with low bypass engine architectures typically utilized for tactical aircraft.

### SUMMARY

A method of assembling a gas turbine engine according to one disclosed non-limiting embodiment of the present disclosure includes setting a build clearance at engine assembly in response to a running tip clearance with cooled cooling air.

A further embodiment of the present disclosure includes, wherein the build clearance is defined between a turbine airfoil and a shroud assembly at engine assembly.

A further embodiment of any of the foregoing embodiments of the present disclosure includes, wherein the running tip clearance is defined between a turbine airfoil and a shroud assembly during engine operation.

A further embodiment of any of the foregoing embodiments of the present disclosure includes selectively supplying the cooled cooling air in response to an engine rotor speed.

A further embodiment of any of the foregoing embodiments of the present disclosure includes selectively supplying the cooled cooling air in response to a high pressure turbine rotor speed.

A further embodiment of any of the foregoing embodiments of the present disclosure includes selectively supplying the cooled cooling air from a heat exchanger system.

A further embodiment of any of the foregoing embodiments of the present disclosure includes communicating an airflow from a second stream airflow path to the heat exchanger system.

A further embodiment of any of the foregoing embodiments of the present disclosure includes ejecting the airflow from the second stream airflow path from the cooled cooling air system to a third stream airflow path.

A further embodiment of any of the foregoing embodiments of the present disclosure includes communicating a core airflow from a primary airflow path to the heat exchanger system.

A further embodiment of any of the foregoing embodiments of the present disclosure includes ejecting the core airflow from the primary airflow path from the cooled cooling air system as the cooled cooling air.

A further embodiment of any of the foregoing embodiments of the present disclosure includes selectively supplying the cooled cooling air to a high pressure turbine section.

A method of operating a gas turbine engine according to another disclosed non-limiting embodiment of the present disclosure includes supplying a cooled cooling air to a high pressure turbine section in response to an engine rotor speed to control a radial tip clearance.

A further embodiment of any of the foregoing embodiments of the present disclosure includes, wherein the cooled cooling air is supplied by a heat exchanger system.

A further embodiment of any of the foregoing embodiments of the present disclosure includes communicating an airflow from a second stream airflow path to the heat exchanger system.

A further embodiment of any of the foregoing embodiments of the present disclosure includes ejecting the airflow from the second stream airflow path from the cooled cooling air system to a third stream airflow path.

A further embodiment of any of the foregoing embodiments of the present disclosure includes communicating a core airflow from a primary airflow path to the heat exchanger system.

A further embodiment of any of the foregoing embodiments of the present disclosure includes ejecting the core airflow from the primary airflow path from the cooled cooling air system as the cooled cooling airflow.

A gas turbine engine according to another disclosed non-limiting embodiment of the present disclosure includes a flow circuit from a second stream airflow path of the gas turbine engine to communicate a portion of an airflow from the second stream airflow path to a heat exchanger; a flow circuit from the heat exchanger to eject the portion of the airflow of the second stream airflow path into a third stream airflow path; a flow circuit from a primary airflow path of the gas turbine engine to communicate a portion of the core airflow from the primary airflow path to the heat exchanger; and a flow circuit from the heat exchanger to eject the portion of the core airflow from the cooled cooling air system as a cooled cooling airflow to a high pressure turbine section of the gas turbine engine.

A further embodiment of any of the foregoing embodiments of the present disclosure includes, wherein the flow circuit from the primary airflow path of the gas turbine engine communicates with a diffuser in a combustor section.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a general schematic view of an exemplary variable cycle gas turbine engine according to one non-limiting embodiment;
Figure 2 is a schematic of a cooled cooling air system for a gas turbine engine;
Figure 3 is a fragmentary axial cross section of a portion of a combustor and turbine section of a gas turbine engine;
Figure 4 is a graphical representation of a high pressure turbine clearance vs high pressure turbine rotor speed that compares base condition, a cooled cooling air condition and a cooled cooling air with tightened clearance condition;
Figure 5 is an overview of one possible FADEC logic approach to modulating cooled cooling air for durability and for clearance control;
Figure 6 is an expanded view of a clearance request for the FADEC cooled cooling air logic;
Figure 7 is a graphical representation of a transient clearance profile during engine acceleration that illustrates the clearance change in response to activation of the cooled cooling air system;
Figure 8 is a graphical representation of a transient clearance profile during engine acceleration that illustrates the clearance change in response to activation of the cooled cooling air system; and
Figure 9 is a graphical representation of a transient clearance profile during engine acceleration that illustrates the clearance change in response to activation of the cooled cooling air system.

### DETAILED DESCRIPTION

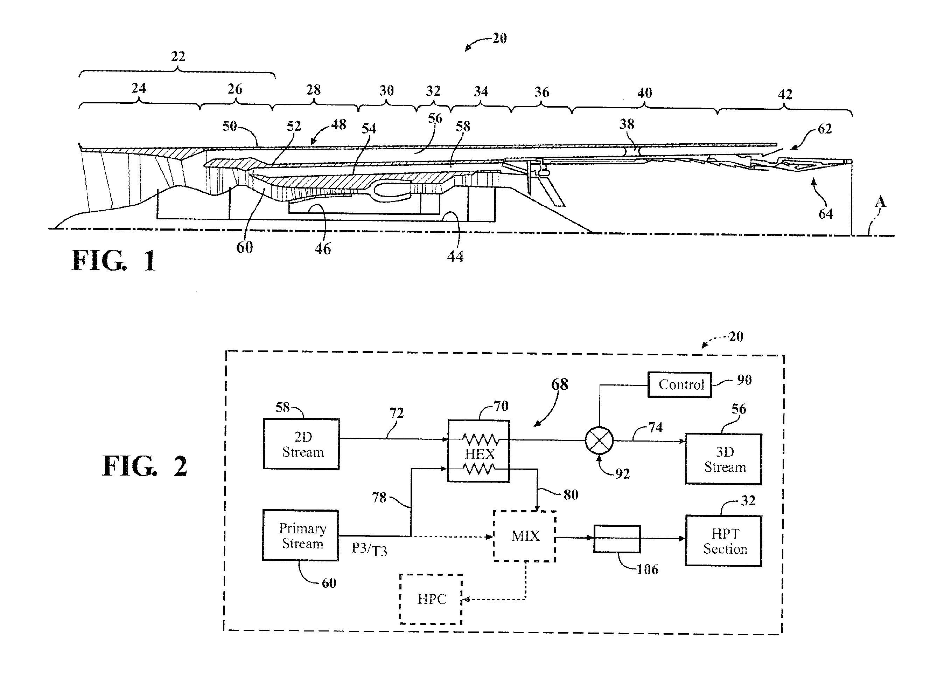

Figure 1 schematically illustrates a gas turbine engine 20. The gas turbine engine 20 is disclosed herein as a variable cycle two-spool bypass turbofan that generally includes: a fan section 22 with a first stage fan section 24 and a second stage fan section 26; a high pressure compressor section 28; a combustor section 30; a high pressure turbine section 32; a low pressure turbine section 34; an augmentor section 36; an annular airflow control system 38; an exhaust duct section 40; and a nozzle section 42. Additional sections, systems and features such as a geared architecture that may be located in various engine sections, for example, aft of the second stage fan section 26 or forward of the low pressure turbine section 34. The sections are defined along a central longitudinal engine axis A. Variable cycle gas turbine engines power aircraft over a range of operating conditions and essentially alters a bypass ratio during flight to achieve countervailing objectives such as high specific thrust for high-energy maneuvers yet optimizes fuel efficiency for cruise and loiter operational modes.

The engine 20 generally includes a low spool 44 and a high spool 46 that rotate about the engine central longitudinal axis A relative to an engine case structure 48. Other architectures, such as three-spool architectures, will also benefit herefrom.

The engine case structure 48 generally includes an outer case structure 50, an intermediate case structure 52 and an inner case structure 54. It should be understood that various components individually and collectively may define the engine case structure 48 to essentially define an exoskeleton that supports the spools 44, 46 for rotation therein.

The first stage fan section 24 communicates airflow into a third stream airflow path 56, a second stream airflow path 58, and a primary airflow path 60 that is in communication with the augmentor section 36. The second stage fan section 26 communicates at least in part with the second stream airflow path 58 and the primary airflow path 60. The fan section 22 may alternatively or additionally include other architectures that, for example, include additional or fewer stages each with or without various combinations of variable or fixed guide vanes.

The primary airflow is compressed by the first stage fan section 24, the second stage fan section 26, the high pressure compressor section 28, mixed and burned with fuel in the combustor section 30, then expanded over the high pressure turbine section 32 and the low pressure turbine section 34. The turbine sections 32, 34 rotationally drive the respective low spool 44 and high spool 46 in response to the expansion. Each of the turbine sections 32, 34 may alternatively or additionally include other architectures that, for example, include additional or fewer stages each with or without various combinations of variable or fixed guide vanes.

The third stream airflow path 56 is generally annular and defined by the outer case structure 50 and the intermediate case structure 52. The second stream airflow path 58 is also generally annular and defined by the intermediate case structure 52 and the inner case structure 54. The primary airflow path 60 is generally annular and defined within the inner case structure 54. The second stream airflow path 58 is defined radially inward of the third stream airflow path 56, and the primary airflow path 60 is radially inward of the primary airflow path 60. Various crossover and cross-communication airflow paths may alternatively or additionally be provided.

The exhaust duct section 40 may be circular in cross-section as typical of an axis-symmetric augmented low bypass turbofan architecture. Alternatively or additionally, the exhaust duct section 40 may be non-axisymmetric and/or non-linear with respect to the central longitudinal engine axis A to form, for example, a serpentine shape to block direct view to the turbine section.

The nozzle section 42 may include a third stream exhaust nozzle 62 (illustrated schematically) that receives flow from the third stream airflow path 56, and a mixed flow exhaust nozzle 64 (illustrated schematically) that receives a mixed flow from the second stream airflow path 58 and the primary airflow path 60. It should be appreciated that various fixed, variable, convergent/divergent, two-dimensional and three-dimensional nozzle systems may be utilized herewith.

With reference to Figure 2, the gas turbine engine 20 includes an air-to-air cooled cooling air system 68 that operates to provide cooled cooling air to the high pressure turbine section 32 and to the back of the compressor section 28. It should be appreciated that the cooled cooling air system 68 may be located within or adjacent to on or more sections of the engine 20. It should be further appreciated that other cooling systems such as an air-to-air heat exchanger, air-to-fuel heat exchanger, or other heat exchanger combination, a bleed from the compressor section 28, a mixer, split cooled cooling air paths from the compressor section 28 and other sections will also benefit herefrom.

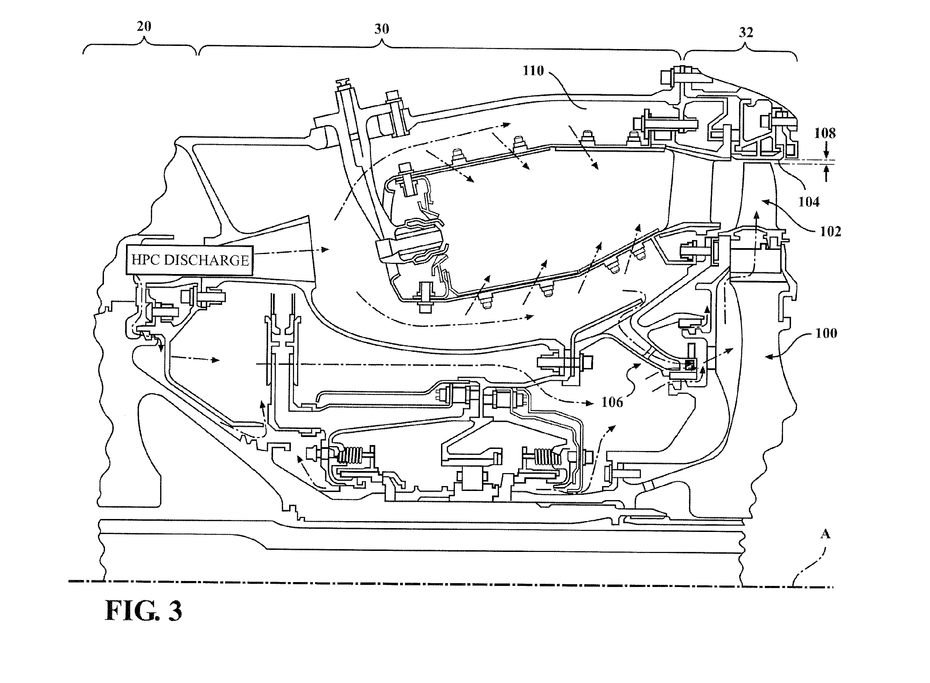

The cooled cooling air is cooling air from a secondary flow system that has been further cooled by the cooled cooling air system 68. That is, the cooling air bypasses the combustor section 30 for subsequent distribution to the hot section of the engine 20 such as the high pressure turbine section 32. The cooling air is typically distributed to one or more rotor disks 100 thence into an interior of each of the circumferentially spaced turbine airfoils 102 supported thereby (Figure 3). It should be appreciated that various structures may be utilized to provide and direct the cooling air.

In one disclosed non-limiting embodiment, the gas turbine engine 20 may be a high Overall Pressure Ratio (OPR) engine architecture that typically has exit temperatures from the high pressure compressor section 28 airflow that are relatively high. Since the high pressure compressor section 28 airflow is used to supply the cooling air to cool the high pressure turbine section 32, the high temperatures from the high OPR must be reduced to cool the high pressure turbine section 32 to meet service life requirements. The cooled cooling air system 68 operates to cool the cooling air to generate cooled cooling air to cool the high pressure turbine section 32.

The cooled cooling air system 68 includes a heat exchanger 70 that receives cooling air from a flow circuit 72 in communication with the second stream airflow path 58, such as the fan section 22, and is then ejected into the third stream airflow path 56 through a flow circuit 74 to be exhausted through the third stream exhaust nozzle 62. The heat exchanger 70 also receives core airflow from the primary airflow path 60 through a flow circuit 78. The flow circuit 78 in one disclosed non-limiting embodiment receives the core airflow from within a diffuser 110 (Figure 3) in the combustor section 30 which is at a relatively higher temperature than the temperature of the airflow in the second stream airflow path 58. That is, the heat exchanger 70 utilizes the second stream airflow from the second stream airflow path 58 to cool the core airflow from the primary airflow path 60 to selectively provide cooled cooling air through a flow circuit 80 in communication with an on-board injector 106 (Figure 3) within the high pressure turbine section 32.

The cooled cooling air from the cooled cooling air system 68 may be selectively modulated in response to a control 90 via a valve system 92. That is, cooling air or cooled cooling air may be selectively modulated in response to the control 90. The control 90 generally includes a control module that executes radial tip clearance control logic to thereby control the radial tip clearance relative the rotating blade tips. The control module typically includes a processor, a memory, and an interface. The processor may be any type of known microprocessor having desired performance characteristics. The memory may be any computer readable medium which stores data, and control algorithms such as the logic described herein. The interface facilitates communication with other components such as a valve system 92 operable to modulate the cooled cooling air when the core cooling air is too hot for the application. The control 90 may, for example, be a portion of a flight control computer, a portion of a Full Authority Digital Engine Control (FADEC), a stand-alone unit or other system.

With reference to Figure 3, in this disclosed non-limiting embodiment, the cooled cooling air from the cooled cooling air system 68 is utilized to cool the one or more rotor disks 100 and the circumferentially spaced turbine airfoils 102 with respect to a shroud assembly 104 that typically includes a multiple of Blade Outer Air Seals (BOAS) within the high pressure turbine section 32.

The fuel consumption of gas turbine engines is dependent on totality of component efficiencies. The high pressure turbine section 32 has a significant effect on this efficiency and may include the basic uncooled aerodynamic efficiency, the effect on the baseline due to the introduction of cooling air, and the effect of clearances. Clearances are particularly relevant as the more open the clearance, the lower the high pressure turbine section 32 efficiency as open clearances result in a portion of the core airflow bypassing the turbine airfoils 102.

The cooled cooling air may be delivered via, for example, the on-board injector 106 such as a tangential on-board injector (TOBI), radial on-board injector (ROBI), angled on-board injector (AOBI) or other structure. The on-board injector 106 may operate to minimize, for example, system pressure losses. The cooled cooling air from the cooled cooling air system 68 increases turbine durability and facilitates control of a radial tip clearance 108 between the turbine airfoils 102 and the shroud assembly 104.

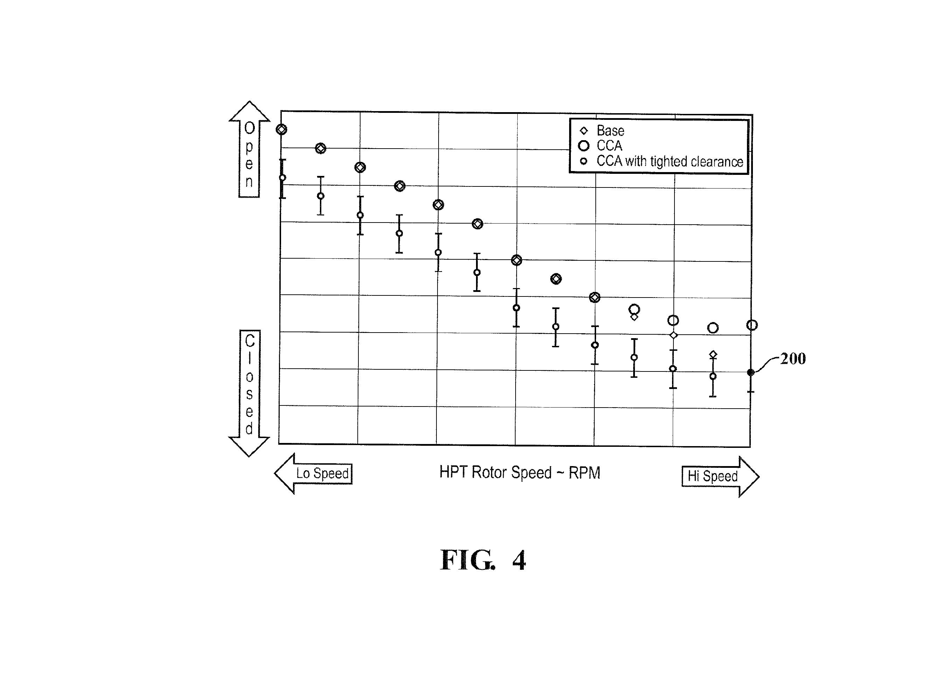

With reference to Figure 4, the physical speed and component temperatures within the high pressure turbine section 32 primarily determine the radial tip clearance 108. The slower the rotor speed, the less centrifugal force exerted on the rotor disks 100 and airfoils 102, which results in a greater radial tip clearance 108. Likewise, the lower the temperature of the rotor disks 100 and airfoils 102, the lesser the thermal growth and the greater the radial tip clearance 108. At relatively low rotor speeds the radial tip clearance 108 are relatively open which negatively effects turbine efficiency. At high rotor speeds the radial tip clearance 108 are relatively closed, with lesser effects on turbine efficiency. The overall effect is generally linear as shown in Figure 4 by the "base condition".

To assure that the turbine airfoils 102 do not rub on the shroud assembly 104 in operation, a build clearance is set during engine assembly to assure a proper running clearance. The build clearance, as defined herein, is the radial tip clearance 108 between the turbine airfoils 102 and the shroud assembly 104 when the engine 20 is assembled. The running clearance, as defined herein, is the radial tip clearance 108 between the turbine airfoils 102 and the shroud assembly 104 when the engine 20 is operating at a maximum rotor speed condition. The build clearance is more open than a running clearance to confirm that the turbine airfoils 102 do not rub on the shroud assembly 104 when the engine is in operation.

As the cooled cooling air from the cooled cooling air system 68 is switched on, the disk 100 is reduced in temperature such that the disk 100 diameter decreases in response to the relative thermal cooling effect. This reduction in diameter increases the radial tip clearance 108 from what the clearance would be without the cooled cooling air from the cooled cooling air system 68 ("CCA" or Cooled Cooling Air condition).

In response to the cooled cooling air, the radial tip clearance 108 flattens at relatively high rotor speeds in contrast to the relative linear relationship of the "base condition". That is, the cooled cooling air increases the radial tip clearance 108 at relatively high rotor speeds as a greater thermal differential is provided. In other words, the radial tip clearance 108 continues to tighten relatively linearly with speed as with "base condition" until the cooled cooling air from the cooled cooling air system 68 is switched on and the radial tip clearance 108 flattens out.

This increased radial tip clearance 108 at the relatively high rotor speeds permits the high pressure turbine section 32 to run tighter along the entire speed range of the engine 20. That is, because the radial tip clearance 108 does not tighten in a linear manner when the cooled cooling air from the cooled cooling air system 68 is switched on at the relatively high rotor speeds, the build clearances can be reduced in accords with the "flattened" running clearance. The build clearance is thereby set in response to the running clearance when the cooled cooling air from the cooled cooling air system 68 is switched on. This produces a flatter, lower curve which is beneficial at idle and cruise power settings. In other words, the CCA condition clearance can be shifted down to reduce clearance along the entire rotor speed range. In one example, the radial tip clearance 108 may be decreased by about 10 mils (0.01"; 0.254mm) that result in an about 0.5% decreased fuel burn. It should be appreciated that the cooled cooling air system 68 need not be operated in a step function format an may be modulated or otherwise partially activated.

The relatively tighter clearances, ("CCA with tightened clearance condition") results in increased high pressure turbine section 32 efficiency which translates into improved engine fuel burn. Notably, the radial tip clearance 108 when the cooled cooling air from the cooled cooling air system 68 is switched on at a high rotor speed point 200 matches the "base condition, i.e., the "CCA with tightened clearance condition", matches the "base condition" at the high rotor speed point 200 (Figure 4). In other words, the build clearance may be set at assembly in response to a running tip clearance with the cooled cooling airflow from the cooled cooling air system 68.

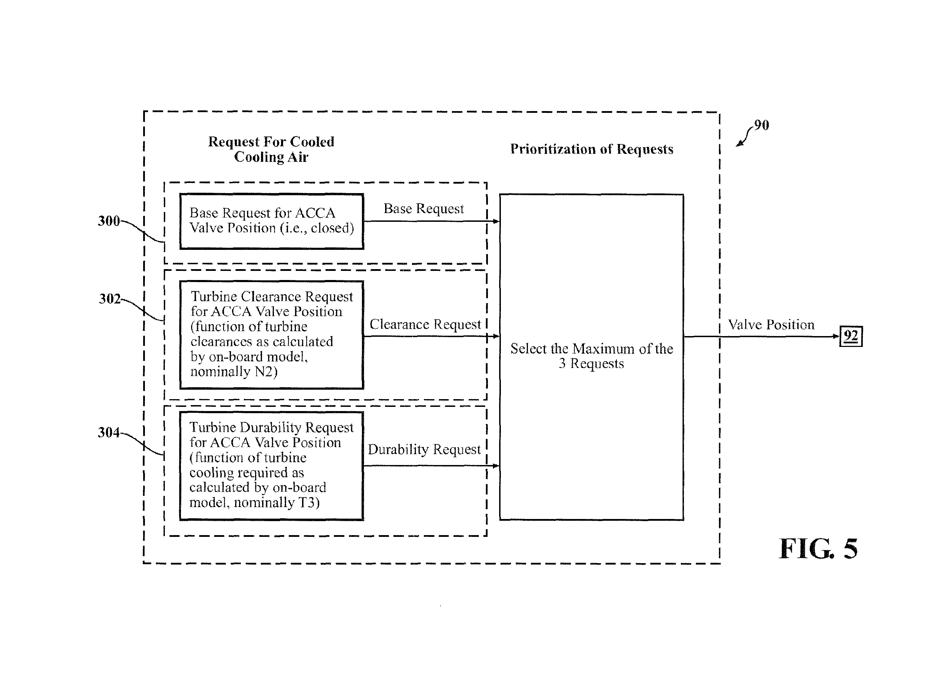

With reference to Figure 5, logic for control of the cooled cooling air with the control 90 according to one disclosed non-limiting embodiment utilizes three elements of a logic approach: a base request 300, a turbine clearance request 302, and a turbine durability request 304. The control 90 is operable to optimally select between these approaches to provide a desired turbine durability with optimized fuel burn.

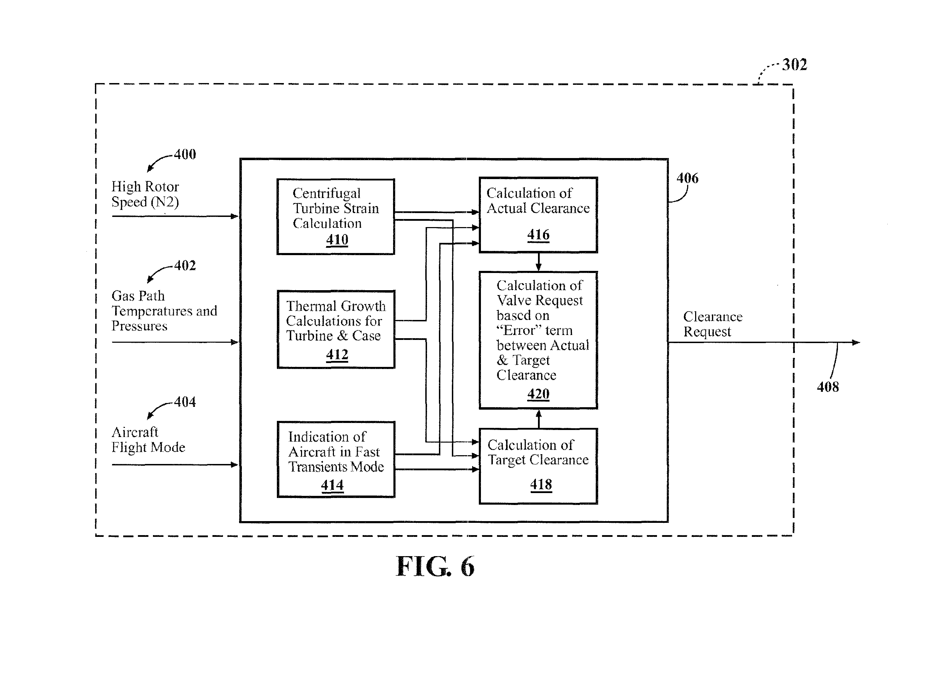

With reference to Figure 6, the turbine clearance approach 302 of the logic, optimizes fuel burn from inputs such as, for example, rotor speed 400, gas path temperatures and pressures 402, and aircraft flight mode 404. The turbine clearance approach 302 may utilize various calculations 406 with these inputs to determine a clearance request 408 that is translated into a position for the valve system 92. The calculations 406 may include but are not limited to, centrifugal turbine strain 410, thermal growth 412, and aircraft flight mode 414, e.g., cruise, turn, acceleration, etc., to determine an actual clearance 416 and a target clearance 418. The delta clearance 420 based on an error between the actual clearance 416 and a target clearance 418 is then translated into the clearance request 408, and ultimately the position for the valve system 92 (Figure 2).

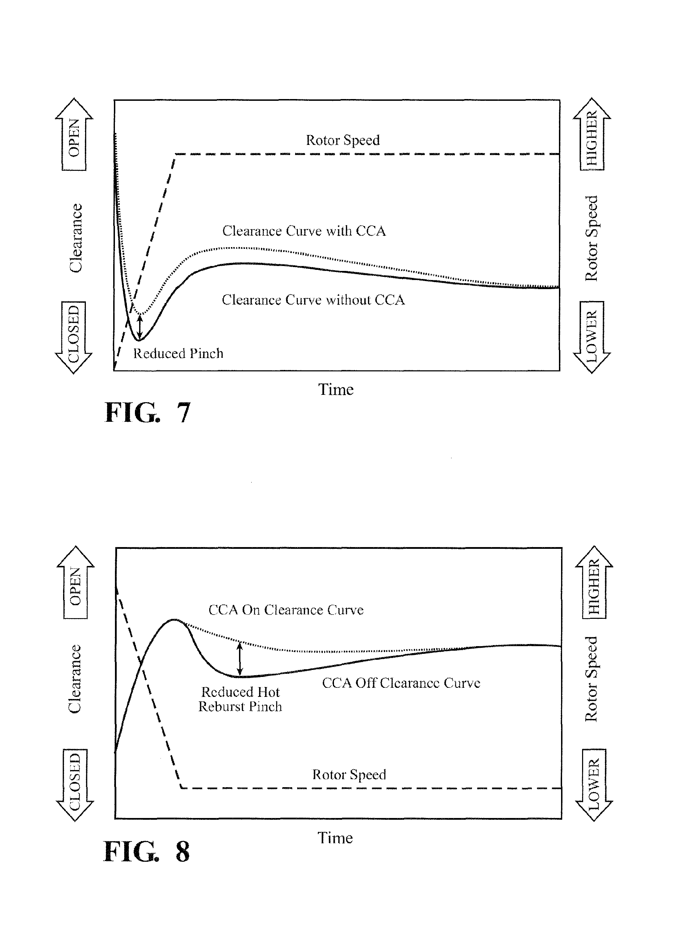

The steady state clearance curve (Figure 4) may be also be selectively adjusted within a range in response to transient clearance conditions during various transient acceleration and deceleration events (Figures 7-9). That is, the cooled cooling air system 68 is operated in response to particular transient conditions such that the resultant steady state clearances may be tailored to accommodate the particular transient clearance conditions.

Transient clearances are typically relatively tighter than the steady state clearances and in order to prevent contact between the turbine airfoils 102 and the shroud assembly 104, the radial tip clearance 108 are otherwise set to be sufficiently open to accommodate the transient conditions. The build clearance directly affects the value of the steady state clearances but need not otherwise affect the shape of the curve (Figure 4). That is, the cooled cooling air system 68 may be selectively operated to limit the pinches during transient events, which in turn permits a reduction in the steady state radial tip clearance 108.

With reference to Figure 7, during a typical engine acceleration, such as a snap acceleration from idle to takeoff power, the clearances pinch down from the steady state idle value due mainly to mechanical growths of the rotor disks 100 and the turbine airfoils 102. This is essentially instantaneous with speed. This acceleration pinch usually occurs in the first few seconds after a throttle movement. The radial tip clearance 108 recovers from the minimum value due to the thermal response of the case and the supported shroud assembly 104 outpacing the thermal response of the rotor disk 100. Eventually, the thermal response of the rotor disks 100 stabilize to the value the steady state takeoff condition.

To reduce the acceleration pinch, the radial tip clearance 108 at idle conditions are opened by activation of the cooled cooling air system 68 at idle. The cooled cooling air from the cooled cooling air system 68 will thereby affect the steady state idle clearance that results in a reduced pinch to provide an associated reduction in the build clearances. Also, the clearance recovers relatively more rapidly after the acceleration pinch to minimize the overshoot of the steady state takeoff clearance which would otherwise reduce performance, i.e., more open clearances are less efficient and more fuel is required to maintain thrust which increases the temperature in the combustor section and fuel burn. The cooled cooling air system 68 may then be turned off after the transient pinch, such that the rotor disks 100 and the turbine airfoils 102 response facilitates a reduction in the magnitude of the overshoot.

With reference to Figure 8, during a deceleration, clearances generally open from the takeoff steady state value as the mechanical growths of the rotor disks 100 and the turbine airfoils 102 decrease with speed. After peaking, the radial tip clearance 108 generally track below the idle steady state radial tip clearance 108 as the shroud assembly 104 cools faster than the radial tip clearance 108. Eventually the radial tip clearance 108 open and recover to the steady state idle value.

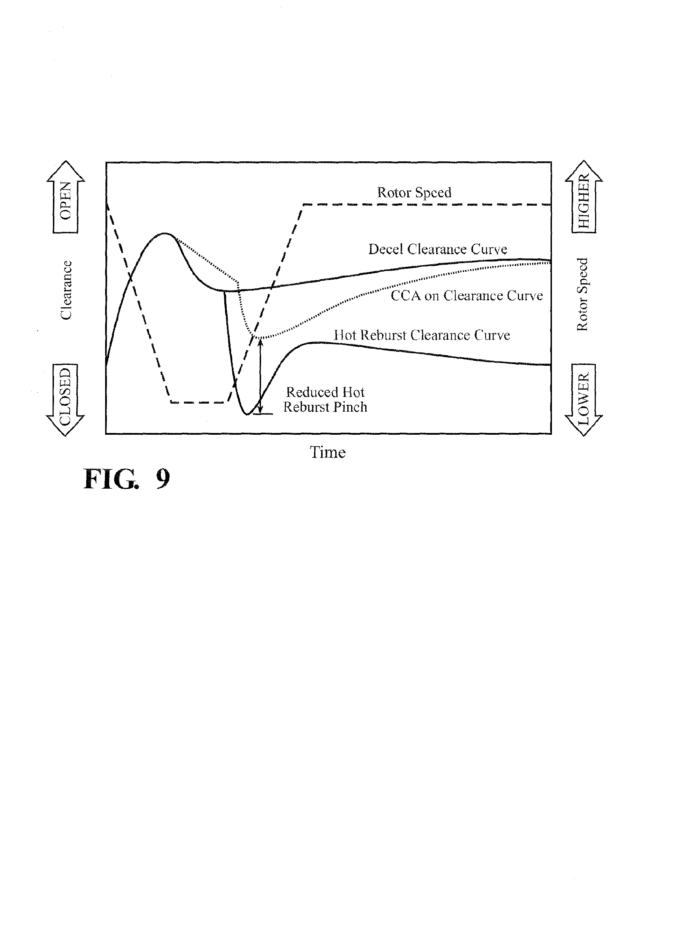

With reference to Figure 9, another type of transient pinch is what is often referred to as a "hot re-accel", "reburst" or "BODIE" event. This occurs when an engine 20 is decelerated from a high power condition to idle, held at idle, then snapped back up to high power. Since the shroud assembly 104 responds faster thermally than the rotor disks 100, these operations create a situation where tighter than idle clearances are observed for a length of time after the deceleration. If the engine 20 is re-accelerated during a particular time interval after the initial deceleration when the engine clearance is lower than the idle clearance, a more significant pinch than the previously described acceleration pinch will occur such that build clearance need be sized accordingly. Typically, this is the lowest radial tip clearance 108 the engine will experience during operation.

To provide clearance for a "hot re-accel", "reburst" or "BODIE" event type of pinch, the cooled cooling air system 68 may be activated at deceleration to cool the rotor disks 100 relatively faster to more specifically match the shroud assembly 104 thermal response. This will produce a more even rate of cooling to thereby control the radial tip clearance 108 to about idle conditions such that the build clearance can be reduced to provide tighter clearances at the steady state conditions.

The cooled cooling air from the cooled cooling air system 68 offers the opportunity to improve engine fuel burn by taking advantage of the identified characteristic shape of increased radial tip clearance 108 to tighten the build clearances.

The use of the terms "a" and "an" and "the" and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A method of assembling a gas turbine engine (20) comprising setting a build clearance at engine assembly in response to a running tip clearance (108) with cooled cooling air.

2. The method as recited in claim 1, wherein the build clearance is defined between a turbine airfoil (102) and a shroud assembly (104) at engine assembly.

3. The method as recited in claim 1 or 2, wherein the running tip clearance (108) is defined between a turbine airfoil (102) and a shroud assembly (104) during engine operation.

4. The method as recited in any of claims 1 to 3, further comprising selectively supplying the cooled cooling air in response to an engine rotor speed.

5. The method as recited in any preceding claim, further comprising selectively supplying the cooled cooling air in response to a high pressure turbine rotor speed.

6. The method as recited in any preceding claim, further comprising selectively supplying the cooled cooling air from a heat exchanger system (68).

7. The method as recited in claim 6, further comprising communicating an airflow from a second stream airflow path (58) to the heat exchanger system (68), and optionally ejecting the airflow from the second stream airflow path (58) from the heat exchanger air system (68) to a third stream airflow path (56).

8. The method as recited in claim 6 or 7, further comprising communicating a core airflow from a primary airflow path (60) to the heat exchanger system (68), and optionally ejecting the core airflow from the primary airflow path (60) from the heat exchange system (68) as the cooled cooling air.

9. The method as recited in any preceding claim, further comprising selectively supplying the cooled cooling air to a high pressure turbine section (32).

10. A method of operating a gas turbine engine (20) comprising supplying a cooled cooling air to a high pressure turbine section (32) in response to an engine rotor speed to control a radial tip clearance (108).

11. The method as recited in claim 10, wherein the cooled cooling air is supplied by a heat exchanger system (68).

12. The method as recited in claim 11, further comprising communicating an airflow from a second stream airflow path (58) to the heat exchanger system (68), and optionally ejecting the airflow from the second stream airflow path (58) from the heat exchanger system (68) to a third stream airflow path (56).

13. The method as recited in claim 11 or 12, further comprising communicating a core airflow from a primary airflow path (60) to the heat exchanger system (68), and optionally ejecting the core airflow from the primary airflow path (60) from the heat exchanger system (68) as the cooled cooling airflow.

14. A gas turbine engine (20) comprising:
a flow circuit (72) from a second stream airflow path (58) of the gas turbine engine (20) to communicate a portion of an airflow from said second stream airflow path (58) to a heat exchanger (70);
a flow circuit (74) from said heat exchanger (70) to eject said portion of said airflow of said second stream airflow path (58) into a third stream airflow path (56);
a flow circuit (78) from a primary airflow path (60) of the gas turbine engine (20) to communicate a portion of an airflow from said primary airflow path (60) to said heat exchanger (70); and
a flow circuit (80) from said heat exchanger (70) to eject said portion of said airflow from said heat exchanger (70) as a cooled cooling airflow to a high pressure turbine section (32) of the gas turbine engine (20).

15. The gas turbine engine (20) as recited in claim 14, wherein said flow circuit (78) from said primary airflow path (60) of the gas turbine engine (20) communicates with a diffuser (110) in a combustor section (30).
